# FASCICULE DE BREVET EUROPEEN

(11) **EP 0 591 019 B1**
(45) Date de publication et mention de la délivrance du brevet: **06.08.1997**
(21) Numéro de dépôt: 93402219.5
(22) Date de dépôt: 13.09.1993
(51) Int. Cl.: C11C 3/04, C11B 13/02

(54) **Procédé amélioré de fabrication d'esters à partir de corps gras d'origine naturelle**
Verbessertes Verfahren zur Herstellung von Esters aus natürlichen Fette
Improved process for producing esters from natural fats

(30) Priorité: 25.09.1992 FR 9211572
(43) Date de publication de la demande: 06.04.1994
(73) Titulaire: INSTITUT FRANCAIS DU PETROLE, 92502 Rueil-Malmaison (FR)
(72) Inventeur: Stern, Robert, F-75017 Paris (FR); Hillion, Gérard, F-95220 Herblay (FR); Rouxel, Jean-Jacques, F-95450 Vigny (FR)

(56) Documents cités:
- GB-A- 578 751
- OLEAGINEUX vol. 40, no. 3 , 1985 pages 147 - 151 R.C.A. LAGO ET AL 'EXTRACTION AND TRANSESTERIFICATION OF VEGETABLE OILS WITH ETHANOL'
- FAT SCIENCE TECHNOLOGY vol. 90, no. 1 , 1988 , LEINFELDEN pages 28 - 32 H. STAGE 'PRINCIPLE OF THE NEW ATT-PROCESS FOR CONVERTING VEGETABLE OILS TO DIESEL FUELS'

## Description

L'objet de l'invention est une amélioration des procédés de transestérification des huiles végétales ou animales. Elle concerne plus précisément l'utilisation de phases huileuses variées généralement perdues ou de faible valeur, phases qui après transformation peuvent être recyclées et donc ajoutées à l'huile qui sert de matière première à la fabrication d'esters.

L'intégration dans les procédés habituels de ce recyclage permet d'obtenir avec un rendement quasi quantitatif par rapport à l'huile engagée, des esters méthyliques, éthyliques, propyliques ou butyliques qui sont employés comme bases de lubrifiants mais aussi en tant que carburants substituts du gazole. Cette intégration, de façon surprenante, ne diminue aucunement la qualité des esters obtenus.

Théoriquement et pratiquement, on sait assez bien fabriquer des esters de corps gras en faisant réagir une huile neutre et un alcool sec à bas poids moléculaire. Le rendement molaire en ester avoisine 97 à 98%.

Le problème est plus ardu lorsque la matière première est une huile acide et/ou un alcool hydraté.

L'état actuel de la technique offre de nombreuses solutions; mais aucune ne semble économiquement et techniquement satisfaisante si l'on considère les rendements obtenus.

Les premières difficultés se rencontrent avec les huiles acides. On a proposé de neutraliser l'acidité et, après décantation ou centrifugation, de faire réagir l'huile neutralisée avec un alcool sec en présence de catalyseurs alcalins.

Il s'agit là en fait de la technique habituelle pratiquée aujourd'hui dans l'industrie huilière. Il reste que l'on perd non seulement l'acide gras, mais aussi une fraction d'huile entraînée par les savons dans la phase aqueuse, cette fraction pouvant être équivalente en poids à celle des acides gras. Cette perte est particulièrement élevée dans le cas de certaines huiles de palme ou de coprah, pour lesquelles l'acidité s'élève parfois jusqu'à 10% en poids d'acide.

Un autre moyen de traiter une huile acide pour l'amener à un état où l'on peut facilement la transformer en ester, est de diminuer l'acidité par un raffinage physique moins coûteux en produits entraînés par rapport à une neutralisation, mais beaucoup plus en énergie et en investissements. Là encore, on perd le poids d'acide contenu dans l'huile.

Avec des huiles très acides on peut envisager d'estérifier ces huiles avec un alcool à bas poids moléculaire en présence d'un catalyseur acide. Le catalyseur est soit un acide soluble, soit une résine échangeuse d'ions. Cependant, pour obtenir une huile peu acide, il faut aussi éliminer l'eau de condensation qui résulte de l'action de l'alcool sur l'acide gras. Pour éliminer cette eau, on utilise soit un sécheur extérieur qu'il faut donc régénérer, soit un système d'entraînement de l'eau par l'alcool lui-même. Ceci provoque l'hydratation de l'alcool, que l'on ne peut plus facilement réutiliser, car les traces d'eau catalysent la saponification des esters si l'on recourt dans l'étape suivante à une transestérification des huiles avec un catalyseur basique. Si l'on utilise cet alcool pour procéder à l'étape de transestérification, on perd donc des quantités non négligeables des savons formés.

Un autre cas qui peut se présenter est le cas assez fréquent dans les pays tropicaux où l'alcool que l'on va engager dans la transestérification est hydraté, comme c'est le cas par exemple de l'alcool éthylique à 96% vol.

Ici de nouveau, on a proposé une technique consistant à utiliser des catalyseurs acides selon deux variantes.

La première variante, décrite notamment dans le document US-A-4652406 amène simplement l'huile à l'état neutre par l'estérification des acides libres; mais cette estérification est d'autant plus ardue qu'il y a de l'eau présente amenée par l'alcool. Il y a concurrence entre l'alcool et l'eau et on ne peut envisager de réduire suffisamment l'acidité qu'en utilisant un sécheur extérieur conséquent ou un tiers solvant.

En adoptant ce système, on réduit les pertes qui viennent de l'acidité, mais il faut encore réduire celles qui vont survenir lorsqu'on va transestérifier l'huile avec un catalyseur basique. En effet, comme il reste généralement de l'ordre de 90% de l'huile à convertir, on est littéralement devant le cas d'une huile neutre que l'on doit transestérifier avec un alcool hydraté. Les pertes en savons sont importantes.

La seconde variante, décrite notamment dans le document US-A-4695411 consiste à procéder à une catalyse acide dans des conditions plus dures, où 80% de l'huile est convertie en esters. La glycérine formée et décantée entraîne la majorité de l'eau. La phase ester, qui est incomplètement convertie, contient de l'eau, de l'alcool et une teneur importante en acide gras. A nouveau pour diminuer l'acidité, on peut estérifier en séchant l'alcool. On procède finalement à une conversion totale en présence d'un catalyseur basique et d'un alcool hydraté ou non. La différence avec le procédé précédent, où on n'estérifie que les acides gras, est qu'il ne reste plus ici qu'environ 10 à 15% de l'huile à convertir en esters. Les pertes en savons peuvent cependant être encore importantes, par exemple de 5 à 8% si l'on utilise un alcool hydraté.

Dans le dernier cas décrit, on pourrait neutraliser les acides gras présents dans la phase ester au lieu d'estérifier, et les décanter, ce qui éviterait l'utilisation d'un sècheur extérieur. Mais là encore, on perd une fraction non négligeable de savons et d'esters entraînés.

Finalement, on peut signaler un dernier cas où l'on utilise en présence d'huile acide ou non, un alcool hydraté et un catalyseur basique. Les pertes sont considérables puisque le catalyseur basique saponifie rapidement l'huile. Les savons ne sont pas en effet des catalyseurs aux températures habituelles.

Ainsi par exemple, avec un alcool éthylique à 95% vol, de l'huile de colza sèche et 1,5% de soude en poids par rapport à l'huile, le rendement en esters est de 83% en poids alors que théoriquement sans perte, il serait de 105% en poids et de 94% à la stoechiométrie de la soude, en admettant que toute la soude se transforme en savon.

Finalement, aucun procédé décrit antérieurement ne semble satisfaisant, même ceux qui utilisent alcool sec et huile neutralisée, puisque là encore, on a entre 2 et 3% de perte.

Tous les autres procédés induisent des pertes encore plus importantes par rapport au rendement théorique en esters, pertes qui peuvent atteindre 30% en poids par rapport à l'huile.

Il a été trouvé de façon surprenante que l'on pouvait obtenir des rendements quantitatifs en esters dans tous les cas où il y a transformation d'huile en esters et ceci sans avoir à recourir à une technologie sophistiquée.

L'invention prévoit d'ajouter aux étapes habituelles connues pour fabriquer des esters de corps gras à partir d'huile et d'alcool à bas poids moléculaire, une étape de recyclage de tous les corps gras entraînés dans la phase glycérineuse, l'ester, les eaux de lavage et/ou les pâtes de neutralisation. Le recyclage est possible grâce à une transformation de ces corps gras en glycérides, de préférence triglycérides, ce qui permet de les ajouter à l'huile de départ donc à les remettre dans le circuit.

Cette transformation est simple et elle ne fait appel à aucun réactif nouveau.

On fait réagir les acides gras et esters et/ou les acides gras et l'huile obtenus après acidification des savons, avec une partie ou toute la glycérine, dans des conditions telles que l'acidité disparaisse et qu'il se forme un mélange de glycérides.

La réaction est schématisée par l'équation suivante :

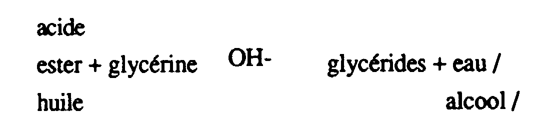

La phase acide gras et corps gras est séparée après acidification soit des pâtes de neutralisation, soit de la glycérine basique obtenue avec tous les procédés utilisant un catalyseur basique, soit par acidification des savons que l'on a formés en neutralisant la fraction ester + acide gras provenant d'une catalyse acide, soit enfin des corps gras entraînés dans les eaux de lavage des esters.

Par rapport à d'autres procédés de recyclage d'acides gras qui pourraient utiliser un catalyseur acide, celui-ci est avantageux, essentiellement pour deux raisons.

Avec un catalyseur acide les températures maximales ne peuvent dépasser 120°C, car il y a risque de formation de polyglycérols et aussi dimérisation des acides gras. De plus, la fraction acide gras obtenue après acidification des savons, doit être très soigneusement lavée pour éliminer la moindre trace d'alcalin. Enfin, on introduit un catalyseur acide qu'il faut ensuite éliminer et les récipients qui sont utilisables doivent résister à la corrosion d'un système qui fonctionne à 120-130°C. Finalement, la réaction est lente et se bloque facilement avant son achèvement.

Le système qui consiste à faire réagir un acide gras et/ou une huile ou un ester avec de la glycérine en présence d'un catalyseur alcalin selon l'invention a un avantage sur les procédés à catalyse acide car on peut chauffer sans problème la glycérine en présence d'alcalis à condition de ne pas dépasser 230°C. En fait, la réaction se déroule entre 165 et 230°C, températures où un savon ou tout sel d'acide faible et de cation alcalin ou alcalino-terreux sont des catalyseurs de condensation de la glycérine et d'un acide gras ou de la glycérine avec un ester.

L'eau et l'alcool qui sont formés ou présents au départ peuvent être facilement éliminés à condition de prévoir une colonne à distiller, avec un minimum de plateaux et un condenseur.

Les cas où l'on peut utiliser le recyclage de savons selon l'invention sont nombreux. Avec des procédés à catalyse basique ou à catalyse acide, on peut mentionner les gains moyens suivants en esters.

| | |
|---|---|
| alcool sec + huile neutre | le gain est de 2 à 3% |
| alcool sec + huile acide | le gain est de 5 à 8% |
| alcool hydraté + huile neutre | le gain est de 10 à 30% |
| alcool hydraté + huile acide (catalyseur acide + basique) | le gain peut être de 5 à 10% |

A chaque fois, le rendement total en esters avec ce recyclage est quasiment quantitatif. Les caractéristiques des esters obtenus sont les mêmes que les meilleures caractéristiques que l'on peut obtenir avec un rendement plus faible, en l'absence du recyclage de l'invention.

En résumé, la mise en oeuvre du procédé consiste à réaliser la transestérification habituelle selon un procédé connu. Toutes les phases glycérineuses, aqueuses ou les pâtes de neutralisation sont réunies et acidifiées. On sépare acide gras et corps gras neutres de la glycérine ou de l'eau et on les fait réagir avec une partie de la glycérine.

Le catalyseur de cette réaction est tiré soit d'une partie de la glycérine non neutralisée, c'est-à-dire basique, soit des eaux de lavage de l'ester si celles-ci sont alcalines, soit de bases ou de sels basiques, comme le carbonate alcalin, introduits après coup dans le mélange. L'important est de bien vérifier que l'on est en milieu basique. A une certaine température et après un certain temps selon les réactifs introduits, on obtient un glycéride dont l'acidité est faible et que l'on ajoute avec ou sans lavage ou filtration à l'huile utilisée comme matière première.

Si chacune des étapes est connue, il n'avait pas été suggéré dans l'art antérieur de recycler avec ce système les phases alcalines des procédés de transestérification en utilisant comme catalyseurs un savon ou une base alcaline introduite après coup, ces catalyseurs permettant de condenser la glycérine avec un acide à partir de 170°C et sans problème.

L'intérêt de cette synthèse de glycéride est aussi que le volume recyclé est faible par rapport à l'huile employée au départ. Dans le cas favorable des huiles neutres et d'un alcool sec, on peut obtenir un rendement quantitatif en recyclant seulement tous les 20 à 30 lots les savons dans un réacteur dont le volume serait équivalent à celui de la transformation principale. En clair, on peut ainsi utiliser un réacteur environ 25 fois plus petit que le réacteur principal pour recycler les savons, si le recyclage est prévu à la fin de chaque opération.

Les conditions précises pour réaliser cette transformation ou conversion d'acide gras ou d'esters en glycérides sont les suivantes :
- le rapport molaire glycérine/acide gras + esters doit être de préférence au moins égal à 1/3. Des rapports supérieurs, par exemple de 1/2 à 1, sont possibles mais non nécessaires.
- avec le rapport 1/3 on obtient en principe le triglycéride; avec les autres rapports, des mélanges de glycérides.
- le catalyseur au départ est une fraction des savons ou de bases présentes dans la glycérine, soit de la soude, de la potasse ou un alcoolate, ou même un sel d'acide faible et de base forte. (On peut imaginer comme catalyseur tout composé de métal alcalin ou alcalino-terreux qui est basique . Comme exemples on peut citer la chaux, la baryte, la magnésie, et tous les composés alcalins déjà cités); et
- les concentrations de catalyseurs calculées en % de soude par rapport à la somme acide gras + esters sont de 0,1 à 1% , de préférence de 0,2 à 0,4%.

Une certaine teneur en eau ou alcool dans les réactifs n'est pas préjudiciable à condition de prévoir leur évaporation avant la condensation.

La glycérine est avantageusement celle obtenue directement après la réaction principale de transestérification en milieu basique et décantation et qui contient donc les savons. Cette glycérine est parfois utilisée partiellement, la majorité étant acidifiée pour séparer les acides gras.

On peut aussi acidifier toute la phase glycérineuse et la phase aqueuse de lavage des esters et ajouter un composé alcalin après avoir mélangé les acides gras et une partie de cette glycérine, qui contient donc des sels minéraux ou des sels organiques.

Les acides utilisés dans la neutralisation de la glycérine ou des pâtes de neutralisation, ou des deux, sont les acides minéraux habituels, comme l'acide chlorydrique, sulfurique ou phosphorique, ou des acides organiques comme l'acide acétique, citrique ou lactique.

Comme la réaction de condensation dégage de l'eau et de l'alcool, il faut en général prévoir de condenser l'alcool et l'eau.

La réaction peut être réalisée dans un évaporateur à film mince ou film tombant qui est un système idéal pour éliminer un alcool ou de l'eau.

La température minimum est de 165°C. La réaction peut se dérouler facilement entre 165 et 230°C. n est en général suffisant de travailler à 200°C.

Le but est d'atteindre dans le mélange une acidité de l'ordre de 2 à 5%, exprimée en acide oléique. Cette acidité est faible si l'on considère que l'on ajoute à l'huile seulement de 2 à 20% de glycéride dans l'huile pure.

Il est particulièrement important d'éliminer toute acidité forte dans le mélange acide gras et glycérine, avant chauffage, sinon on risque de décomposer la glycérine en acroléine.

Parfois, on peut ajouter le glycéride non pas à l'huile neutre mais à l'huile brute, ce qui permet de décolorer en partie le glycéride si l'on fait un traitement sur terre de blanchiment. L'huile brute est souvent soumise à une démucilagénation et une filtration sur terre.

Le schéma non intégré est en gros le suivant : 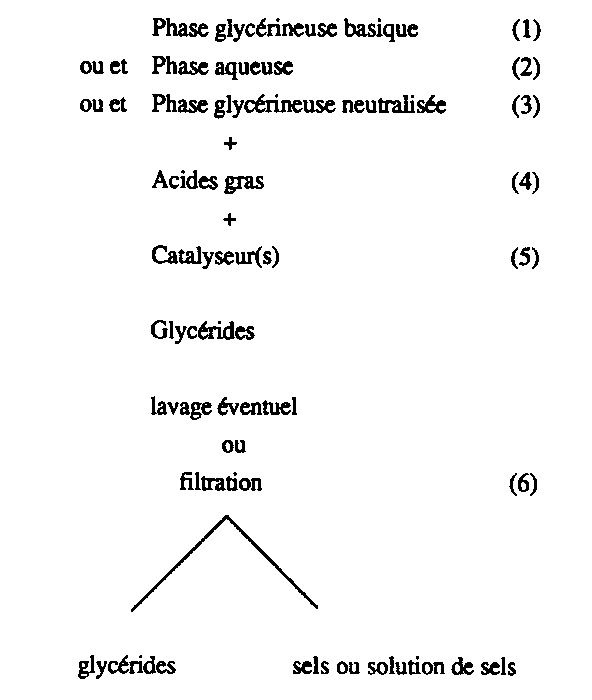
(1) Glycérine basique obtenue dans les procédés de transestérification des huiles parfois utilisable en partie comme source du catalyseur et de la glycérine.
(2) Phase aqueuse provenant des pâtes de neutralisation, du lavage d'ester ou de la neutralisation des esters.
(3) Phase neutralisée de la glycérine.
(4) Acides gras qui proviennent de toutes les phases déjà énumérées après neutralisation.
(5) Catalyseurs alcalins ou alcalino-terreux, qui sont soit ajoutés soit présents dans les phases utilisées.

De préférence, il est intéressant de ne pas laver mais de filtrer les sels de type sulfate ou chlorure ou même acétate.

La condensation peut se faire dans un système en continu par exemple dans un évaporateur à film tombant.

Les exemples suivants illustrent l'invention mais ne sont pas limitatifs. L'exemple 5 est donné à titre de comparaison.

### Exemple 1 :

On fait réagir 1000 g d'huile de colza à 0,2% d'acidité oléique, 250 g de méthanol sec et de la soude (4 g dilués dans l'alcool). Après 1 h, on obtient deux phases. La phase glycérineuse et la phase ester sont séparées. Après épuration de la phase ester, on obtient 970 g d'ester sec dont la pureté est de 98%.

95% de la phase glycérineuse sont mélangés à la phase aqueuse de lavage des esters et neutralisés avec de l'acide sulfurique. On filtre le sulfate de sodium et l'on évapore l'alcool. On sépare les acides gras qui contiennent aussi de l'ester entraîné et on fait réagir cette phase avec la phase glycérineuse non neutralisée. Après condensation de l'eau et de l'alcool, on obtient au bout de 2 heures à 200°C un rendement en poids de 32 g de glycéride que l'on ajoute au lot suivant L'acidité du glycéride est de 3,2%.

Les caractéristiques de l'ester obtenu par action du méthanol sur le mélange "huile de départ + glycéride", formé sont les suivantes :

| | |
|---|---|
| masse volumique | 880 |
| point éclair | 185°C |
| indice de neutralisation | 0,5 mg KOH/g |
| point d'écoulement | -12°C |
| TLF | -18°C |

(température limite de filtrabilité)
teneur en ester méthylique > 98%
taux de glycérine totale < 0,3%
(libre et liée)

### Exemple 2 :

Le même exemple est répété avec une huile de colza à 1,2% d'acide oléique mais 5 g de catalyseur. Après 1h30, on obtient deux phases. L'ester épuré pèse 961 g. On neutralise la phase glycérineuse à l'acide chlorydrique après ajout des phases aqueuses des lavages de l'ester. On fait réagir 5% de la phase glycérineuse avec l'acide gras isolé et 0,1 g de soude ajoutée. Après 3 h à 200°C, l'acidité est de 5,8%. Le glycéride pèse 43 g. Cette acidité contribue à peine à l'acidité totale de l'ensemble puisqu'elle n'ajoute que 0,2%. Le rendement final est de 99,9% en esters par rapport à l'huile.

### Exemple 3 :

On mélange
400 g d'huile de colza peu acide
100 g d'un mélange de glycéride dont l'acidité est de 2,9%
125 g d'alcool méthylique sec
2,7 g de soude dissoute dans l'alcool

Après épuration de l'ester, on obtient 485 g d'ester dont la pureté est de 97,5% et qui contient 0,45% de monoglycéride, le reste étant un mélange d'esters de stérol et de diglycérides.

On a ainsi remis en circuit les pertes correspondant à 10 lots.

### Exemple 4 :

La réaction est réalisée comme dans l'exemple 1 mais avec un méthanol à 1% d'eau. Après recyclage des phases acides le rendement en esters après ajout des glycérides est de 99,8%. Le rendement réel de la première réaction de transestérification sans recyclage n'était que de 95% en ester .

### Exemple 5 :(contre exemple)

On chauffe 15 g de glycérine, 100 g d'acide gras, 0,5 g d'acide sulfonique à 110°C. Après 3 h, l'acidité est encore de 35% et semble bloquée.

### Exemple 6 :

Avec une huile de tournesol neutre et un alcool éthylique à 95%, on obtient 83,8% d'ester à partir de 1000 g d'huile dans une catalyse basique. Après récupération de la phase acide et réaction avec de la glycérine neutralisée et de la glycérine non neutralisée qui fournit le catalyseur, on obtient à 200°C, 185 g de glycéride dont l'acidité est de 2,37% après 3 h à 200°C.
Poids total récupéré: 838 g+ 185 g = 1023 g
Théoriquement, on pourrait avoir 1050 g d'esters.

Grâce à ce recyclage, on peut arriver à fabriquer un ester avec un alcool aqueux dans des conditions assez artisanales.

### Exemple 7 :

On prend 1000 g d'huile de palme à 7% d'acidité, on ajoute 300 g de méthanol et 1,2% de soude diluée dans l'alcool. La phase ester contient 860 g d'esters méthyliques après séchage. On fait réagir les acides gras tirés de la phase glycérineuse après acidification avec l'acide chlorydrique avec 20% de la glycérine évaporée neutralisée et 0,5 g de soude. On obtient plus de 130 g de glycéride.

### Exemple 8 :

On fait réagir les acides gras provenant d'une pâte de neutralisation ne contenant pas de phospholipides avec les acides gras provenant d'une glycérine basique tirée d'une transestérification et de la glycérine neutralisée provenant de cette même transestérification.

On ajoute 0,2% de potasse et l'on chauffe à 200°C. On obtient un glycéride faiblement acide que l'on peut ajouter à l'huile de colza neutralisée. De cette manière, on récupère non seulement les pertes dues à la réaction de transestérification mais aussi celles des pâtes de neutralisation.

Il faut éviter d'avoir une trop grande concentration en phosphore dans les produits d'addition pour éviter d'en retrouver dans les esters.

## Revendications

1. Procédé amélioré de fabrication d'esters à partir d'huiles végétales ou animales et d'alcools à bas poids moléculaire, caractérisé en ce que l'on recycle les savons et les composés huileux entraînés dans les phases alcalines en les traitant, après acidification et séparation, avec une fraction de la phase glycérineuse produite dans le procédé, ceci en présence de catalyseur alcalin et pour former au mieux un triglycéride ou un glycéride partiellement substitué.

2. Procédé selon la revendication 1, caractérisé en ce que le rapport glycérine/acide gras + ester est au minimum de 1/3 en mole.

3. Procédé selon l'une des revendications 1 et 2, caractérisé en ce que la température de réaction est de 165 à 230°C.

4. Procédé selon l'une des revendications 1 à 3 , caractérisé en ce que le catalyseur est une fraction de la glycérine basique.

5. Procédé selon l'une des revendications 1 à 4, caractérisé en ce que l'on recycle les savons présents dans la glycérine, les pâtes de neutralisation ou les savons présents dans la phase aqueuse de lavage des esters ou les savons formés dans les esters acides neutralisés.

6. Procédé selon l'une des revendications 1 à 5, caractérisé en ce que le glycéride formé est ajouté à l'huile de départ.

7. Procédé selon l'une des revendications 1 à 6, caractérisé en ce que le glycéride est ajouté à l'huile avant démucilagination.

8. Procédé selon l'une des revendications 1 à 7, caractérisé en ce que le glycéride avant d'être ajouté à l'huile est filtré ou lavé.

9. Procédé quantitatif de fabrication d'esters méthylique, éthylique, propylique, ou butylique selon l'une des revendications 1 à 8, caractérisé en ce qu'il permet d'obtenir un substitut de gazole dont les caractéristiques sont identiques aux meilleures caractéristiques d'un ester fabriqué avec un rendement plus faible sans recyclage.

10. Ester substitut de gazole obtenu par un procédé selon l'une des revendications 1 à 9.

## Patentansprüche

1. Verbessertes Verfahren zur Herstellung von Estern aus pflanzlichen oder tierischen Fetten und niedermolekularen Alkoholen, dadurch gekennzeichnet, daß die in den alkalischen Phasen mitgerissenen Seifen und öligen Verbindungen zurückgewonnen werden, indem sie nach Säuerung und Trennung mit einer Fraktion der im Laufe des Prozesses entstandenen Glyzerinphase in Gegenwart eines alkalischen Katalysators behandelt werden, um bestenfalls ein Triglyzerid oder ein zum Teil substituiertes Glycerid zu bilden.

2. Verfahren nach Anspruch 1, dadurch gekennzeichnet, daß das Molverhaltnis zwischen Glyzerin und Fettsäure + Ester mindestens 1/3 beträgt.

3. Verfahren nach einem der Ansprüche 1 und 2, dadurch gekennzeichnet, daß die Reaktionstemperatur bei 165 bis 230° C liegt.

4. Verfahren nach einem der Ansprüche 1 bis 3, dadurch gekennzeichnet, daß der Katalysator eine Fraktion des basischen Glyzerins ist.

5. Verfahren nach einem der Ansprüche 1 bis 4, dadurch gekennzeichnet, daß eine Rückgewinnung der im Glyzerin vorhandenen Seifen, der Neutralisationspasten oder der in der Wasserphase der Esterwaschflüssigkeit vorhandenen Seifenoder der sich in den neutralisierten sauren Estern bildenden Seifen vorgenommen wird.

6. Verfahren nach einem der Ansprüche 1 bis 5, dadurch gekenzeichnet, daß das gebildete Glyzerid dem Ausgangsöl zugeführt wird.

7. Verfahren nach einem der Ansprüche 1 bis 6, dadurch gekennzeichnet, daß das Glyzerid vor Entfernung des Pflanzenschleims dem Öl zugesetzt wird.

8. Verfahren nach einem der Ansprüche 1 bis 7, dadurch gekennzeichnet, daß das Glyzerid vor Zugabe in das Öl filtriert oder gewaschen wird.

9. Mengenmäßiges Verfahren zur Herstellung von Methyl-, Ethyl- Propyl- oder Butyl- estern nach einem der Ansprüche 1 bis 8, dadurch gekennzeichnet, daß anhand dieses Verfarens es möglich ist, ein Gasölersatzprodukt zu erhalten, dessen Merkmale mit den besten Merkmalen eines Esters identisch sind, der ohne Rückgewinnung bei geringer Ausbeute hergestellt wird.

10. Gasölersatzester, der durch ein Verfahren nach einem der Ansprüche 1 bis 9 hergestellt wird.

## Claims

1. Improved process for the production of esters from animal or vegetable oils and low molecular weight alcohols, characterized in that recycling takes place of the soaps and the oily compounds entrained in the alkaline phases by treating them, after acidification and separation, with a fraction of the glycerol phase produced in the process, this taking place in the presence of an alkaline catalyst and for forming preferably a triglyceride or a partly substituted glyceride.

2. Process according to claim 1, characterized in that the glycerol/fatty acid + ester molar ratio is min. 1/3.

3. Process according to either of the claims 1 and 2, characterized in that the reaction temperature is 165 to 230°C.

4. Process according to any one of the claims 1 to 3, characterized in that the catalyst is a basic glycerol fraction.

5. Process according to any one of the claims 1 to 4, characterized in that the soaps present in the glycerol, the neutralization pastes or the soaps present in the aqueous ester washing phase or the soaps formed in the neutralized acid esters are recycled.

6. Process according to any one of the claims 1 to 5, characterized in that the glyceride formed is added to the starting oil.

7. Process according to any one of the claims 1 to 6, characterized in that the glyceride is added to the oil after demucilagenation.

8. Process according to any one of the claims 1 to 7, characterized in that the glyceride is filtered or washed before being added to the oil.

9. Quantitative process for the production of methyl, ethyl, propyl or butyl esters according to any one of the claims 1 to 8, characterized in that it makes it possible to obtain a gas oil substitute, whose characteristics are identical to the best characteristics of an ester produced with a lower yield without recycling.

10. Gas oil substitute ester obtained by a process according to any one of the claims 1 to 9.
